Europäisches Patentamt

(19) European Patent Office

Office européen des brevets

(11) **EP 1 190 271 B1**

(12) **EUROPEAN PATENT SPECIFICATION**

(45) Date of publication and mention
of the grant of the patent:
**03.09.2003 Bulletin 2003/36**

(51) Int Cl.⁷: $G02B\ 21/24$

(86) International application number:
**PCT/EP00/04987**

(21) Application number: **00938717.6**

(22) Date of filing: **30.05.2000**

(87) International publication number:
**WO 00/075709 (14.12.2000 Gazette 2000/50)**

(54) **ROBUST AUTOFOCUS SYSTEM FOR A MICROSCOPE**

ROBUSTES AUTOFOKUSSYSTEM FÜR MIKROSKOP

SYSTEME ROBUSTE DE MISE AU POINT POUR MICROSCOPE

(84) Designated Contracting States:
**AT BE CH CY DE DK ES FI FR GB GR IE IT LI LU
MC NL PT SE**
Designated Extension States:
**AL LT LV MK RO SI**

(30) Priority: **04.06.1999 EP 99201795**

(43) Date of publication of application:
**27.03.2002 Bulletin 2002/13**

(73) Proprietor: **JANSSEN PHARMACEUTICA N.V.
2340 Beerse (BE)**

(72) Inventor: **GEUSEBROEK, Jan-Mark,
Janssen Pharmaceutica N.V.
B-2340 Beerse (BE)**

(74) Representative: **De Corte, Filip Alois Julia
Janssen Pharmaceutica N.V.
Turnhoutseweg 30
2340 Beerse (BE)**

(56) References cited:
**DE-A- 19 726 696**          **US-A- 4 203 031**
**US-A- 5 790 710**

**Description**

The present invention relates to an autofocus system especially to an autofocus system suitable for a wide range of different microscope types, for example, but not limited to, a fluorescent microscope or a phase contrast microscope.

**TECHNICAL BACKGROUND**

Along with the introduction of high throughput screenings, quantitative microscopy is gaining importance in pharmaceutical research. Fully automatic acquisition of microscope images is an unattended operation coupled to an automatic image analysis system allows for the investigation of morphological changes. Time lapse experiments reveal the effect of drug compounds on the dynamics of living cells. Histochemical assessment of fixed tissue sections is used to quantify pathological modification.

A critical step in automatic screening is focusing. Fast and reliable autofocus methods for the acquisition of microscope images are indispensable for routine use on a large scale. Autofocus is also a requirement for any fully automated microscope-based image processing system that must scan areas larger than a single field. This requirement for autofocus may be generated by several factors including mechanical instability of the microscope and irregularity of the sample and/or its container, e.g. a glass slide. For example, thermal expansion could account for several microns of instability in microscopes with lamps acting as unevenly distributed heat sources. Mechanical instability may also arise from backlash between moving components in the microscope stage driving motor and gears. Preferably autofocus algorithms should be generally applicable on a large variety of microscopic modes and on a large variety of preparation techniques and specimen types. Although autofocusing is a long-standing topic in literature, no such generally applicable solution is available. Methods are often designed for one kind of imaging mode. Further the assumptions made for determining the focal plane in fluorescence microscopy are often not compatible with the same in phase contrast microscopy. There has been a long felt need for a method which is generally applicable in light microscopy.

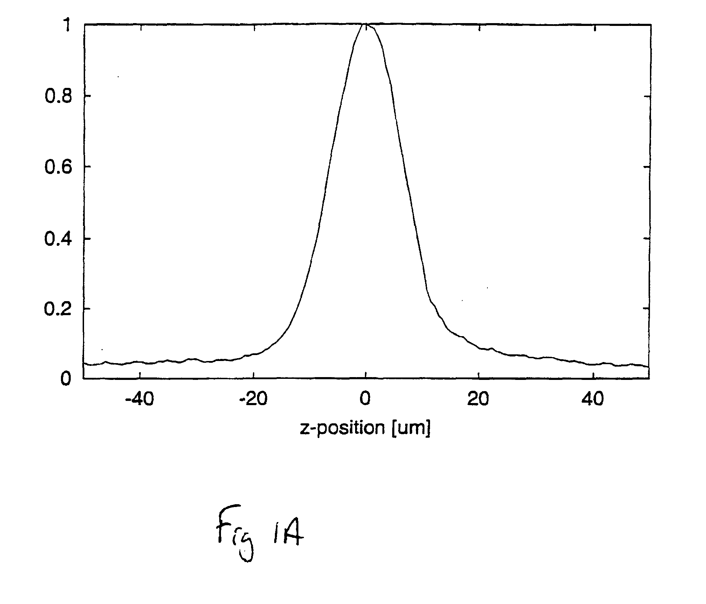

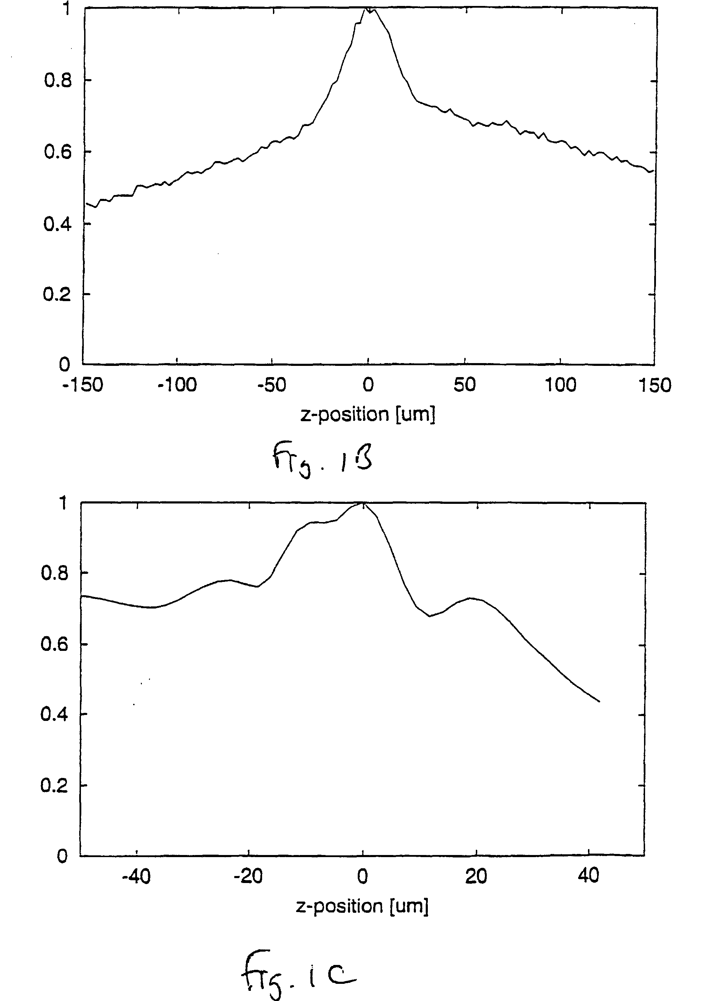

From Fourier optics it has been deduced that well-focused images contain more detail than images out of focus. Conventionally a focus score is used to measure the amount of detail. The focus curve can be estimated from sampling the focus score for different levels of focus. Some examples of focus curves are shown in Figs. 1a to c. Best focus is found by searching for the optimum in the focus curve. In a conventional approach the value of the focus score is estimated for a few focus positions. Evaluation of the scores indicates where on the focus curve to take the next sample. Repeating the process iteratively should ensure convergence to the focal plane. A major drawback is that such optimization procedure presupposes 1) a uni-modal focus function, and 2) a broad-tailed extremum to obtain a wide focus range. The example focus curves in Figs. 1a to c show that this does not hold true in general. In reality, the focus curve depends on the microscope set-up, imaging mode and preparation characteristics. When the assumed shape of the focus curve does not match the real focus curve, or when local extrema emerge, convergence to the focal plane is not guaranteed, see "A comparison of different focus functions for use in autofocus algorithms", Cytometry 1985; 6: pp 81-91, Groen et al.

Groen et al. suggest eight criteria for comparing the performance of autofocus functions. These are: 1) unimodality, or the existence of a single maximum or minimum; 2) accuracy, or coincidence of the extremum and best focus; 3) reproducibility, or a sharp extremum; 4) range, or the vertical distance over which the function will unambiguously determine the direction to best focus; 5) general applicability, or the ability to work on different classes of images; 6) insensitivity to other parameters, or independence from influences such as changes in mean intensity; 7) video signal compatibility, or the ability to use the same video signal as is utilized for image analysis; and 8) implementation, that is, it should be possible to calculate the function rapidly. Groen et al. concluded that three autofocus functions, i. e., two gradient functions and the intensity variance, performed the best. However, some autofocus functions that performed well on one specimen did not perform well on others and the authors cautioned against extrapolating the results to other imaging modes and specimens. Under insensitivity to other parameters is considered robustness against noise and optical artifacts common to microscopic image acquisition. Further, it is preferable to avoid that unimodality of the focus curve is an absolute necessary requirement because unimodality cannot be achieved in regularly practice. As a consequence, the range of broadness of the extremum in the focus curve is of less relevance.

Most autofocus methods fall into two categories: position sensing and image content analysis. Position sensing methods, such as interferometry, require independent calibration of the best focus location and, more importantly, a single well-defined surface from which to reflect light or sound. In light microscopy there are often two reflective surfaces, the coverslip and slide. In addition, tissue specimens can have significant depth and best focus is not necessarily achieved at the surface of the glass. These problems make absolute position sensing methods impractical for use in light microscopy. Image content analysis functions depend only on characteristics measured directly from the image. Best focus is found by comparison of these characteristics in a series of images acquired at different vertical positions. This method of autofocus requires no independent reference and is not affected significantly by any additional reflective surfaces. Its most important limitation is speed, which is dependent on the video rate, the vertical repositioning time, function calculation time and search range.

The uncertainty in applying autofocus test results from one microscope method to another led to the present invention. The development of the present invention included exploring autofocus performance in microscopy of fluorescent stained biological specimens. The fluorescent signal can be used directly for autofocus. However, problems summarized by others, such as Chen (Chen L B: Fluorescent labeling of mitochondria, in Fluorescence Microscopy of Living Cells in Culture, Part A, Wang Y L and Taylor D L, eds. Academic Press, San Diego, 103-123, 1989), including photobleaching and the formation of free radicals, singlet oxygen, and heat, can create conditions under which minimizing fluorescent excitation becomes critical. The most critical conditions probably occur in analyzing live cells. If the signal is weak and antiphotobleaching agents cannot be used because of toxicity, the signal could easily be completely lost in the 5-10 video frames of exposure required for autofocus. In addition, the fluorescence by-products themselves are toxic, and excessive exposure could alter the results or damage living cells. Therefore, it is desirable to find a non-destructive imaging technique for autofocus. With brightfield microscopy, fluorescent stained cells appear unstained, showing very little contrast. Phase-contrast microscopy, on the other hand, gives high contrast images of unstained cells and is more useful for autofocus. It would be preferable if a single autofocus algorithm would provide good autofocus performance for both phase contrast and fluorescence microscopy.

An object of the present invention is to provide an autofocus method which is generally applicable in different microscopic modes.

A further object is to provide an autofocus method especially suited for an unattended operational environment, such as high throughput screenings.

A further object of the present invention is to provide an autofocus method especially suited for capturing and monitoring images which vary with time.

Still a further object of the present inventions is to provide an autofocus method which is robust against confounding factors common in microscopy, such as noise, optical artifacts and dust on the preparation surface.

## SUMMARY OF THE INVENTION

The present invention includes a method of autofocus an optical instrument for viewing an object and an autofocusing mechanism as set out in the claims.

In the above method, apparatus and mechanism the spatial extent of the smoothing function may be manually or electronically settable or a combination of both. For instance, the spatial extent may be manually settable. The operator may enter a dimension of an object in the image to be captured which is to be used for autofocusing purposes. Alternatively, a default value may be selected by the apparatus and a focusing attempt made. If no suitable focus score is achieved, an alternative spatial extent for the smoothing function may be automatically selected by the apparatus. Alternatively, the operator may input a range, e.g. 1 to 5 microns and the apparatus selects the spatial extent of the smoothing function based on a value derived from the range, e.g. the mid-value or the lowest value derived from the range. This value may be used for a first attempt at autofocusing. If this first attempt is not successful, the apparatus may select another value within the range specified by the operator. The larger the spatial extent of the smoothing function the less the noise in the image but also the greater is the chance that small objects in the image are not "seen" by the filter and therefore are not used for autofocusing. Where these small objects are dust particles, the failure of the filter to see these particles is an advantage. Hence, a larger value of the spatial extent can eliminate erroneous results caused by "noise", e.g. dust particles. The spatial extent should not be chosen too large otherwise the objects which are to viewed in the image may be smaller that the spatial extent of the smoothing function with the result that the details of the sought object no longer drive the convergence of the filter on the correct focus position. The ability to manually or electronically select the spatial extent of the smoothing function has the advantage that the optimum smoothing extent can be chosen which reduces noise to a minimum while still allowing the autofocusing system to select the focus position based on the object to be captured in the image.

Generally, with all embodiments of the present invention, the spatial extent of the gradient filter in accordance with the present invention determines how noise is excluded from the autofocusing procedure using the captured and filtered image. A real image may include large objects of interest embedded in a matrix of small objects. During filtering of the image, the small objects will act like noise. If a fine grained autofocusing technique is used, the autofocus mechanism will always focus on the small objects. Preferably, the spatial extent of the gradient filter in accordance with the present invention is settable by the operator and/or is electronically settable. By altering the spatial extent of the gradient filter in accordance with the present invention, a range of objects in the image from small to large may be selected by the autofocus filter. That is the contribution of small or large details in the image to the focus score is more or less depending upon the spatial extent of the filter. For instance, the present invention includes changing the value of the spatial extent of the gradient filter if a suitable focus score is not obtained at a first setting of the spatial extent. Further the present invention includes filtering each image with several different spatial extents for the filter in parallel.

Thus, for each image captured during the autofocus scan, several focus scores are obtained simultaneously by parallel processing of the image data with several different spatial extents. At the end of the travel of the object to be viewed a plurality of focus curves are obtained from which the best may be selected. The present invention also includes other methods of obtaining a suitable focus score when an initial value at initial settings is not obtained. For instance, if a suitable focus score is not obtained initially the method and system in accordance with the present invention includes one or more refocusing attempts in specimen fields adjacent to the field in which good focusing was not obtained. The present invention also includes calculating a plurality of focus scores for each image using a different spatial extent for each calculation. To save time this may be done in parallel. The present invention also includes selectively setting the range of the values of the spatial extent used for each image. By specifying a range, the autofocus system and method according to the present invention does not try to focus on items which are too large or too small.

It is not anticipated that specific implementation of the digital gradient filter in accordance with the present invention is limiting on the present invention. For example, the digital filter may be implemented as a convolutional filter "ter Haar Romey BM, "Geometry driven Diffusion in Computer Vision", Boston, Kluwer academic Publishers, 1999, page 439", a recursive filter (van Vliet et. al. "Recursive Gaussian derivative filters", Proc. ICPR '98, IEEE Computer Soc. Press, 1998, pp. 509-514), a morphological filter (van den Boomgaard et. al. "Quadratic structuring and functions in mathematical morphology", Mathematical morphology and its application to signal processing", vol. 3, 1996) or similar.

The auto-focusing system, mechanism and method in accordance with the present invention may find advantageous use in a microscope.

The dependent claims define discrete embodiments of the present invention. The present invention will now be described with reference to the following drawings.

## Brief description of the drawings

Figs. 1a to c are examples of measured focus curves for a) a bright-field image of stained neuronal tissue from mice, b) an image of fluorescent beads, and c) a phase contrast image of living PC12 cells, a rat pheochromcytoma cell line.

Fig. 2 is a schematic representation of a microscope system to which the present invention may be applied.

Figs. 3a to e are schematic representations of mathematical functions which may be used to define the gradient filter in accordance with embodiments of the present invention.

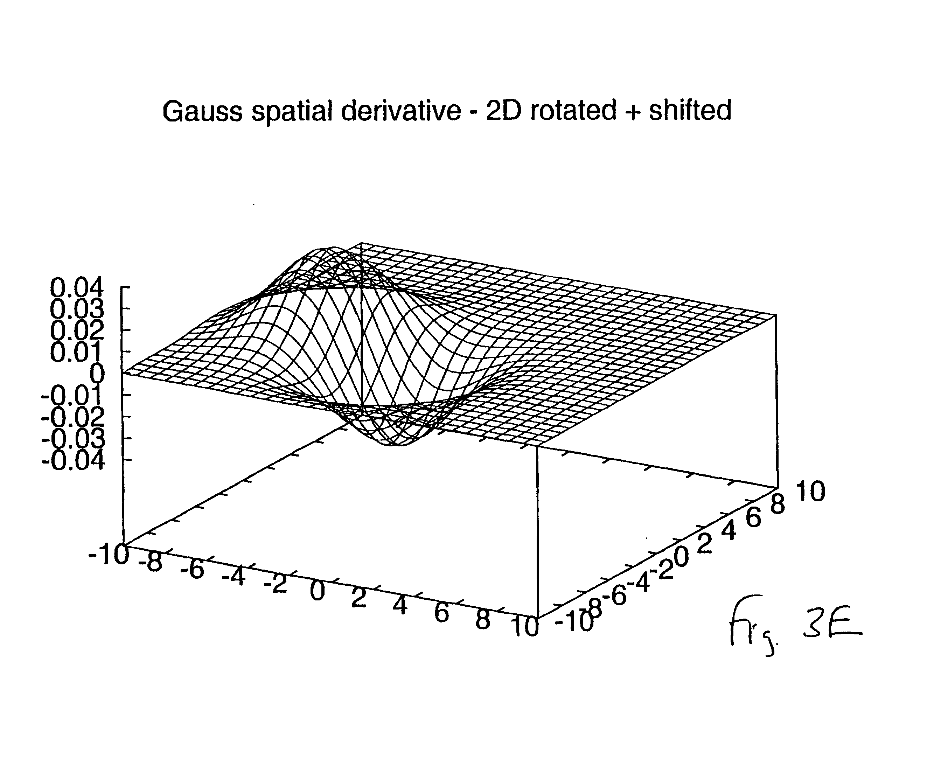

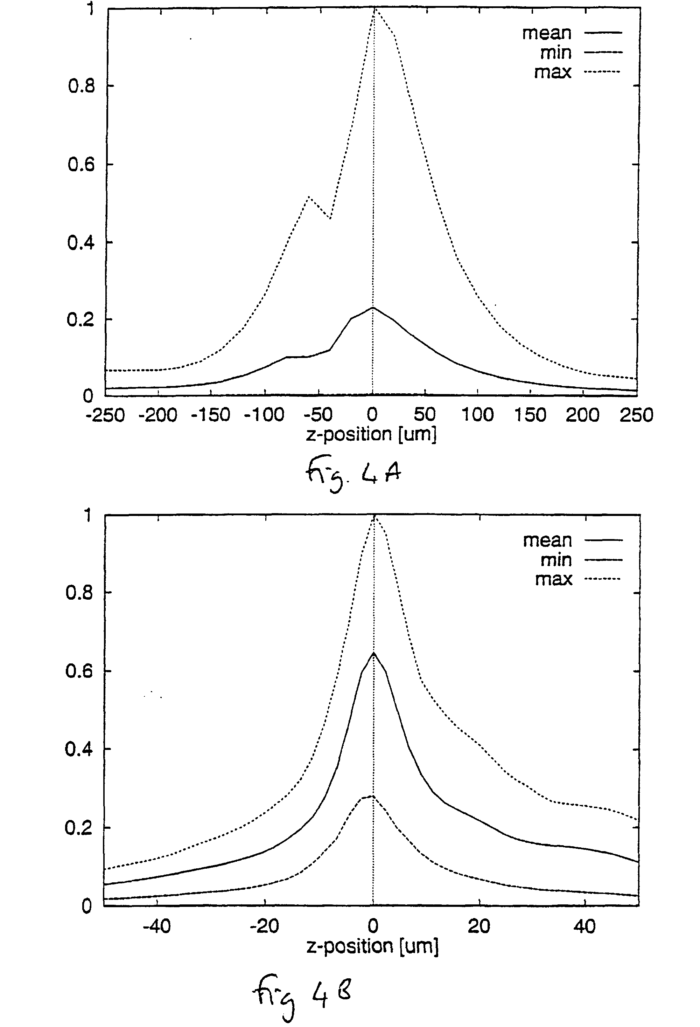

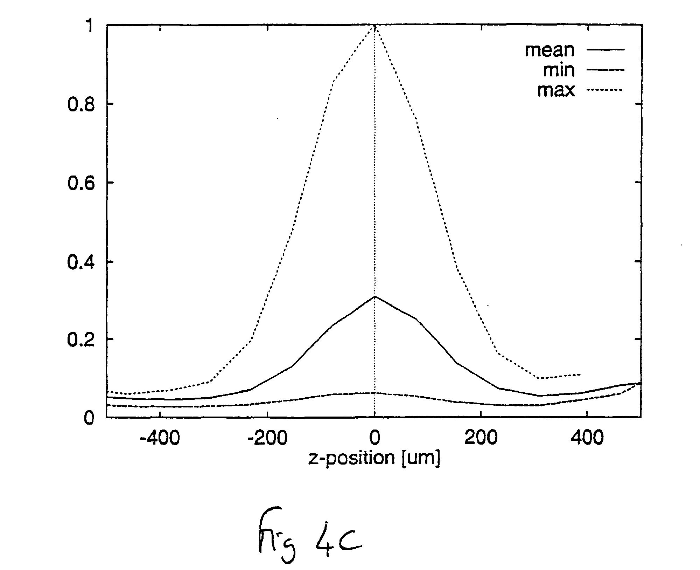

Figs. 4a to f show the mean, minimum and maximum focus scores (arbitrary units) as function of the z position (optical axis of the microscope) measured in accordance with a method of the present invention, a) quantitative neuronal morphology, b) cardiac myocyte dedifferentiation, c) immunohistochemical label detection, d) *C. Elegans* GFP-VM screening, e) and f) immunocytochemical label detection, nuclei and immuno signal, respectively. The measured focus curves indicated by "max" and "min" represent the focus events resulting in the lowest and highest maximum score which indicates the variability and influence of noise on the estimate of the focus score.

Fig. 5 is a representation to show the effect of different spatial extents for the gradient filter in accordance with an embodiment of the present invention.

## Description of the illustrative embodiments

The present invention will be described with reference to certain drawings and embodiments but the invention is not limited thereto but only by the claims. The present invention will also be described with respect to a microscope system but the present invention is not limited thereto but only by the claims. For instance, the present invention may find advantageous use in any optical instrument in which autofocus is of importance. Further, the present invention will be mainly described with reference to a microscope with a specimen stage moveable stage along the optical axis of the microscope but the present invention is not limited thereto but includes optical instruments with which focusing is obtained by adjustment of an objective of the optical instrument and not by movement of the specimen. The present invention also includes combinations of the two, e.g. adjustment of an objective within a first range and if a suitable focus score is not obtained, movement of the specimen stage along the optical axis followed by a further focusing attempt.

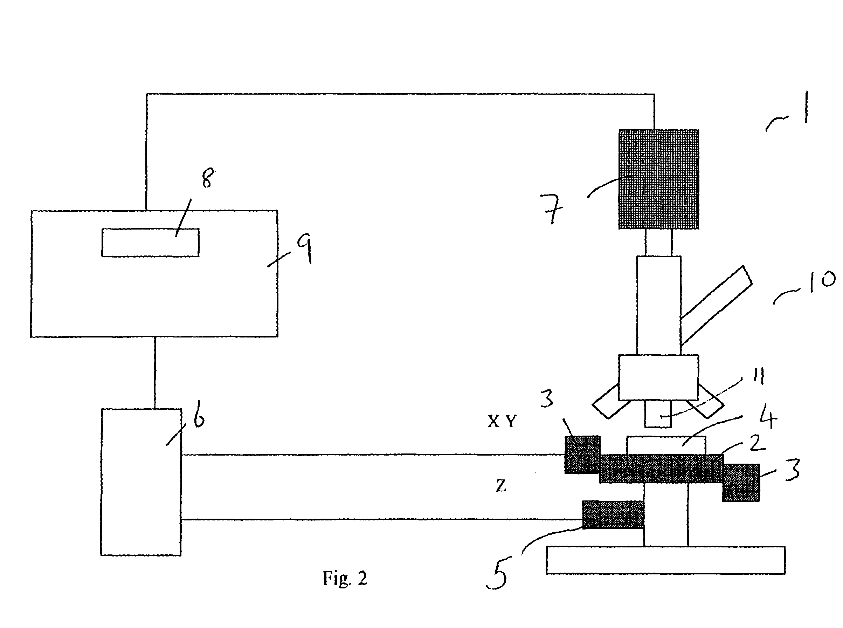

Fig. 2 illustrates an optical instrument, a microscope system 1, to which the autofocus system according to the present invention may be applied. The hardware components of the system I include a microscope 1, a motorized stage 2 controlled by a pair of XY motors 3 and a Z motor 5, an XYZ stage controller 6, a video camera 7, an image processor and host processor 9 with a video frame grabber 8. A separate image processor including video frame grabber may be provided but the present invention is not limited thereto. The XYZ stage controller controls the movements in the X, Y, and Z directions independently. The Z direction is along the optical axis (the focusing axis) of microscope 10. Typically, the microscope stage 2 will be moved laterally and vertically under computer control by stepper motors or DC servomotors. Suitable components are further described in detail below in the description of the examples. The specimen 4 to be viewed through the microscope 10 is located on the stage 2. Lamps, e.g. fluorescent lamps, and other optical accessories well known to the skilled person will not be described.

Although the present invention will mainly be described with reference to an XYZ stage 2 (movements in three orthogonal directions) the present invention is not limited thereto. To obtain focusing there is only a requirement for relative movement between the objective 11 of the microscope 10 and the specimen 4. It is not anticipated that the method of achieving this is a limitation on the present invention.

The present invention also includes optical devices in which an objective 11 is adjusted to determine a focus position rather than moving the specimen along the optical axis. In such an optical instrument the objective 11 may be adjusted by any suitable adjusting device which may be controlled by the host processor such as a piezoelectric objective positioner. The positioner may be sandwiched between the objective turret and the objective 11. Such a positioner may be obtained from Polytech, PI, Costa mesa, California, USA, e.g. an E-810.10 closed loop controller. With such a system the objective 11 is adjusted instead of moving the specimen along the optical axis of the microscope. Combinations of objective and specimen movement are also included within the scope of the present invention.

In accordance with the present invention measurement of the focus score can best be based on the energy content of a linearly filtered image. Further, an optimal focus score is preferably output by a gradient filter.

In accordance with the present invention the gradient filter is limited in its spatial extent either side of the pixel of the captured image which is being processed. In digital filtering the pixel value to be filtered is combined in some way with pixel values from pixels around the pixel being filtered. The smoothing function has a spatial extent, i.e. it is a function of distance and determines whether or not the value of a pixel at a certain distance from the pixel being filtered should be included in the filtering for that pixel and if so with what weighting. Experiments have shown that this spatial extent should not be less than three pixels either side of the pixel being filtered. A reduced spatial extent may results in less accurate autofocusing or even in no ability to find a focus position with some types of image. The gradient filter may include one or more operators. For instance, the gradient filter may include at least one of the following:

1) a gradient operator to generate the first or higher order spatial differential of the image followed by a smoothing operator which determines and limits the spatial extent of the digital filtering either side of the pixel being filtered.

2) a combined gradient and smoothing operator which carries out both gradient and smoothing operations in one pass.

3) a smoothing operator applied to the image to limit the spatial extent of the pixels involved in the filtering around each pixel being filtered followed by a gradient operator to generate a first order or higher order spatial differentiation of the smoothed image.

In accordance with embodiments of the present invention the digital gradient filter may include a mathematical function having a negative and positive lobe around the origin thereof, the mathematical function being limited in spatial extent in that it extends over a distance smaller than or equal to the image size and extends at least over three pixels either side of a pixel whose value is being filtered. Preferably, the function has only one zero crossing within the spatial extent.

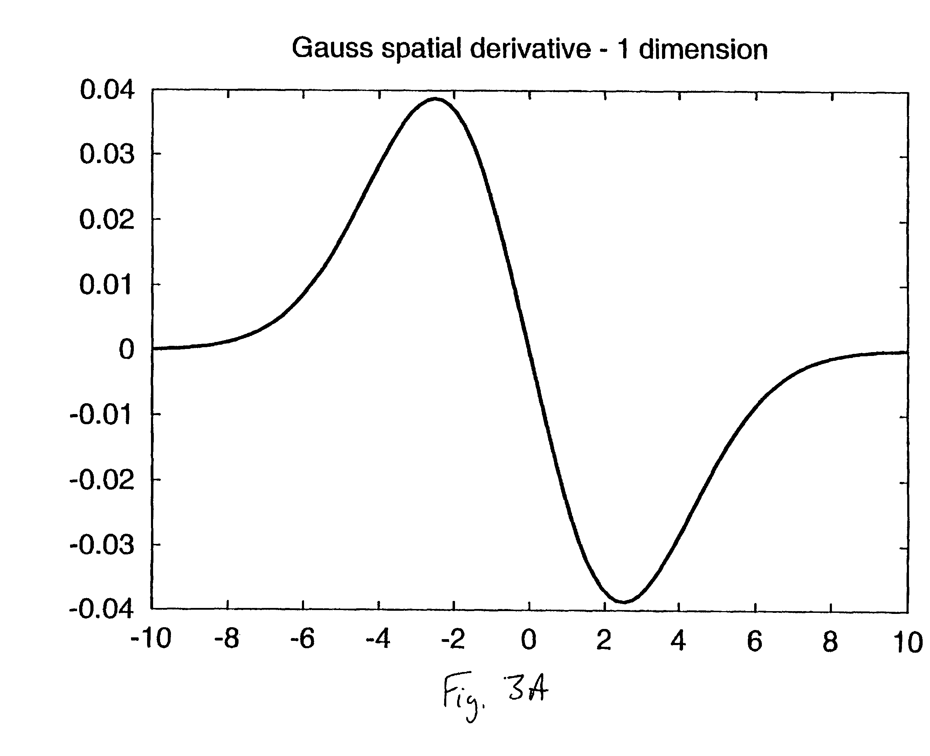

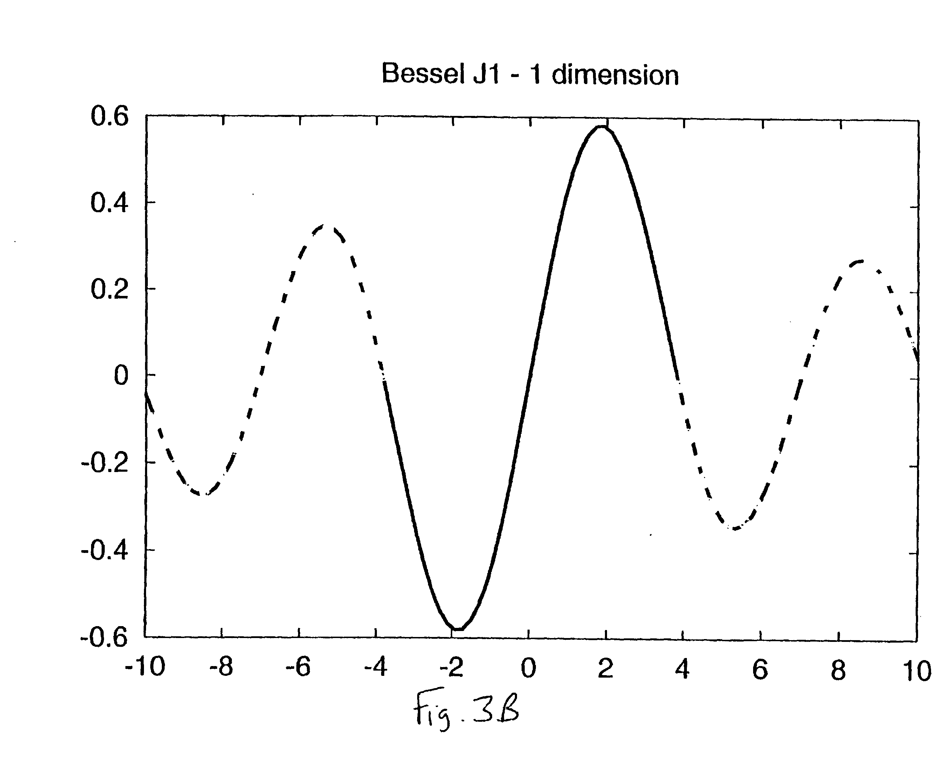

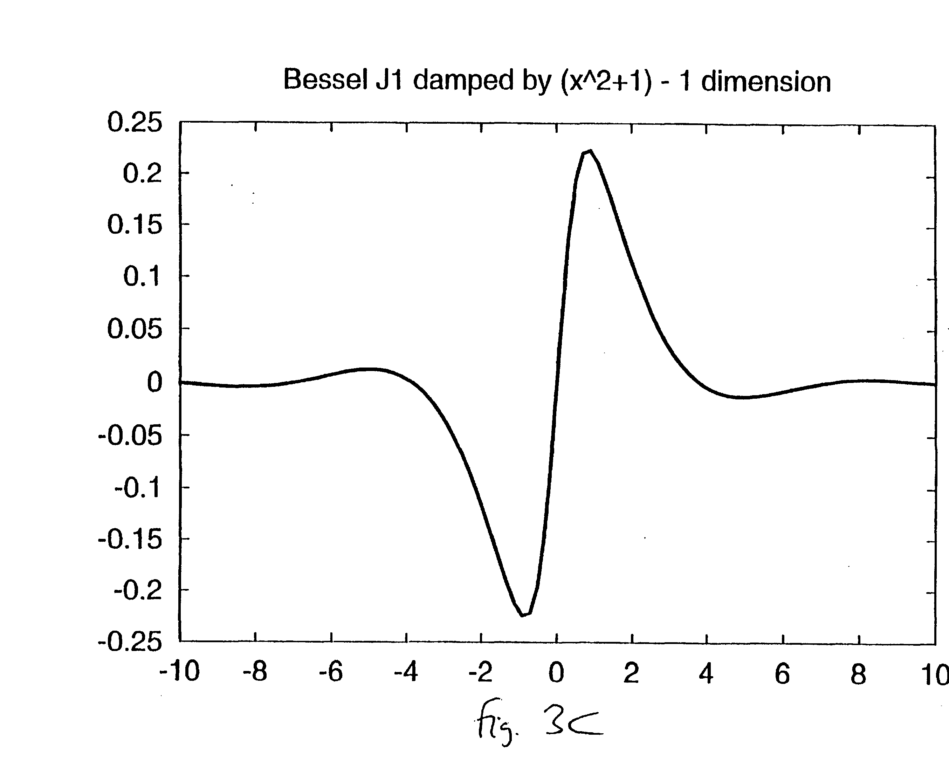

Examples of the types of functions useful in embodiments of the gradient filter in accordance with the present invention are shown in Figs. 3A to E. Fig. 3A shows a function with its X axis as the spatial axis in pixel units and its Y axis being the weighting factor used in the digital filtering. The spatial origin preferably coincides with the pixel to be filtered (as shown). The function is the spatial derivative of a normal Gaussian curve. It can be seen that the function has two lobes, one positive and one negative either side of the spatial zero. These lobes extend over a spatial distance of at least 3 pixels either side of the spatial origin. In fact, in the example shown, the function has appreciable values up to 7 pixels each side of the origin. The effect of the difference in sign of the lobes each side of the spatial origin is to determine a gradient of the image when the function is used for digital filtering. Within the extent of the function which has appreciable values there is only one zero crossing. This is preferably at the spatial origin as shown in Fig. 2A, i.e. the zero crossing coincides with the pixel to be filtered.

The present invention is not limited to a derivative of the Gaussian curve as the function defining the gradient filter. As shown in Fig. 3B an odd-order Bessel function may also be used (the figure shows a first order Bessel function) or any other function which has positive and negative lobes either side of the spatial origin. As can be seen from Fig. 3B, the first order Bessel function has two lobes, one positive and one negative, either side of the spatial origin. Due to the fact that a Bessel function has more than one zero crossing point, the spatial extent of the Bessel function is preferably limited (e.g. by truncation) to the distance either side of the origin which lies within the first non-origin zero crossing points, for example in Fig. 3B this would mean truncating the Bessel function at about the fourth pixel so that values of the function at higher pixel values (or lower negative values) are zero or negligible. This is shown by the dotted line.

An alternative approach would be to damp the Bessel function so that the number of zero crossings is reduced. The function of Fig. 3C is a dampened version of the first order Bessel function of Fig. 3B using the damping function $x^2 + 1$. It can be seen that the effect of the damping is to reduce the Y axis values effectively to zero beyond the fourth pixel. Accordingly, the damping function effectively truncates the Bessel function so that there is only one zero crossing within the range + 3 pixels and values at higher pixel values are effectively zero.

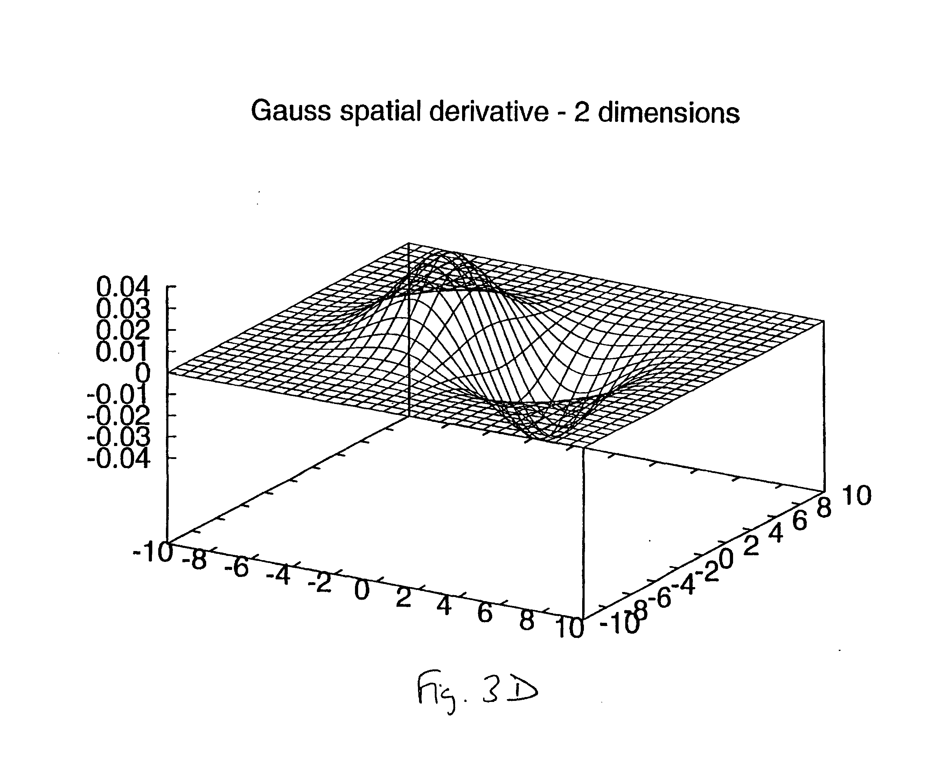

The digital gradient filter according to the present invention is not limited to one dimensional filtering as would be indicated by the filtering functions of Figs. 3A to C. A three dimensional representation of a two-dimensional gradient filter function in accordance with an embodiment of the present invention is shown schematically in Fig. 3D. Fig. 3D shows a two-dimensional spatial differential of a two dimensional normal Gaussian curve. The X and Y-axes lie in the plane of the captured image and have pixel numbers as units. The Z-axis represents the weighting applied to the relevant pixel number as used in the filtering process. The origin 0,0,0 lies on the pixel to be filtered. The function has two three-dimensional lobes, one positive and one negative. The origin of the two lobes preferably coincides with the pixel to be filtered. Rotation of the orientation of the lobes as shown schematically in Fig. 3E is also included within the present invention and does not reduce the effectiveness of the filtering.

In accordance with one preferred embodiment of the image filter of the present invention a two-dimensional Gaussian derivative as shown in Fig. 3D is used within the plane (x, y co-ordinates of an x,y,z co-ordinate system in which the direction z is perpendicular to the specimen to be imaged, i.e. the direction z is in the focusing direction) of the image to measure the focus score. The σ of the Gauss filter determines the extent of the filtering and is related to the scale of prominent features. A suitable focus function is:

$$F(\sigma) = \frac{1}{NM} \sum_{x,y} \left[ f(x,y) * G_x(x,y,\sigma) \right]^2 + \left[ f(x,y) * G_y(x,y,\sigma) \right]^2$$

$$= \frac{1}{NM} \sum_{x,y} f_x^2 + f_y^2 \tag{1}$$

where $f(x,y)$ is the image gray value, $Gx(x,y,\sigma)$ and $Gy(x,y,\sigma)$ are the first order Gaussian derivatives in the $x$- and $y$-direction at scale σ, $NM$ is the total number of pixels in the image, and $fx, fy$ are the image derivatives at scale σ in the $x$- and $y$-direction, respectively. Further, discussion of Gaussian gradient filters may be found in the article by ter Haar Romey BM, "Geometry driven Diffusion in Computer Vision", Boston, Kluwer academic Publishers, 1999, page 439; and in "Traitement de l'image sur micro-ordinateur", Jean-Jacques Toumazet, Sybex, 1987, pages 156 to 158 which describes the method of J. F. Canny.

Often, a trade-off between noise sensitivity and detail sensitivity can be observed for a specific microscope set-up. For example, in fluorescence microscopy the signal to noise ratio (SNR) is often low, and relatively smooth images are examined. For phase contrast microscopy, SNR is high, and small details (the phase transitions) have to be detected. Accuracy of autofocusing depends on the signal to noise ratio as propagated through the focus score filter. In accordance with an embodiment of the present invention, the σ of the Gaussian filter may be freely chosen by the operator so that it lies within the range of 3 pixels to the size of the image. The value of σ is preferably chosen such that noise is maximally suppressed, while the response to details of interest in the image is preserved. For bar-like structures, the value of σ preferably conforms to

$$\sigma \geq \frac{d}{2\sqrt{3}} \tag{2}$$

where the thickness of the bar is given by $d$. Assuming that the smallest detail to be focused may be considered bar shaped, $eq$. 2 gives an indication for the value of σ. The focal plane of the microscope is assumed to be within a pre-defined interval $\Delta z$ around the start $z$-position $z$. The scanning stage is moved down to the position $zmin = z - \frac{1}{2}\Delta z$. Backlash correction is applied by always approaching a focusing position from the same direction, e.g. sending the stage further down than necessary, and raising it again to the given position. As a result, mechanical tolerance in cogwheels is eliminated.

As $t = 0$ ms, the stage controller starts raising the stage to traverse the complete focus interval $\Delta z$. During the continuous stage movement through focus, successive images of the preparation are captured at 40 ms intervals or at any other standard video rate. The focus score of each captured image is then calculated. In accordance with a preferred embodiment of the present invention the image buffer is re-used for the next video frame, necessitating only two image memory buffers to be active at any time. One of the buffers is used to provide the data necessary for the focus score calculation of the previously captured image, while the other is used for capturing the next image. Hence, calculation of the focus score is preferably performed within one video frame time.

As soon as the stage has reached the end of the focus interval, timing is stopped at $t = td$ ms. An estimation of the focus curve is obtained from the focus score results for the complete focus interval. The global optimum in the estimate for the focus curve represents the focal plane to be used as the final focusing position of the specimen. Each z-position is calculated from the time at which the corresponding image was captured. When linear movement of the stage is assumed, the position at which the image at time $ti$ is taken corresponds to

$$z_i = \frac{t_i}{t_d}\Delta z + z_{min} \tag{3}$$

where $t_d$ represents the travel duration, $\Delta z$ is the focus interval, and $z_{min}$ is the start position (position at $t = 0$ ms).

It has been found that it is safe to assume that the focus curve is parabolic around the focal plane. From this a high focus precision can be achieved by quadratic interpolation. When assuming linear stage movement, or $z = vt + z_{min}$, the focus curve around the focal plane can be approximately by

$$s(t) = c + bt + at^2 \tag{4}$$

The exact focus position is obtained by fitting a parabola through the detected optimum and its neighboring measurements. Consider the detected optimum $s(t_0) = s_0$ at time $t = t_0$. The time axis may be redefined such that the detected optimum is at time $t = 0$. Then, neighboring scores are given by $(s_n, t_n)$ and $(s_p, t_p)$, respectively. Solving for $a$, $b$ and $c$ gives

$$c = s_0, b = \frac{-s_0 t_n^2 + s_p t_n^2 + s_0 t_p^2 - s_n t_p^2}{t_n^2 t_p - t_n t_p^2}, a = \frac{s_0 t_n - s_p t_n - s_0 t_p + s_n t_p}{t_n^2 t_p - t_n t_p^2} \tag{5}$$

The peak of the parabola, and thus the elapsed time to the focus position, is given by

$$t_f = -\frac{b}{2a} + t_0 = \frac{s_0 t_n^2 - s_p t_n^2 - s_0 t_p^2 + s_n t_p^2}{2\left(s_0 t_n - s_p t_n - s_0 t_p + s_n t_p\right)} + t_0 \tag{6}$$

The focal plane is at a position given by:

$$zf = \frac{t_f}{t_d}\Delta z + z_{min} \tag{7}$$

to which the specimen is moved, taking the backlash correction into account.

The depth of field of an optical system is defined as the axial distance form the focal plane over which details still can be observed with satisfactory sharpness. The thickness of the slice which can be considered in focus is then given by:

$$z_d = \frac{n\lambda}{NA^2} \tag{8}$$

where $n$ is the refractive index of the medium, $\lambda$ the wavelength of the used light, and $NA$ the numerical aperture of the objective. The focus curve is sampled at Nyquist rate when measured at $z_d$ intervals. Common video hardware captures frames at a fixed rate. Thus the sampling density of the focus curve can only be influenced by adjusting the stage velocity to travel $z_d$ µm per video frame time.

The present invention also includes additional method steps if the focus score is not good enough after filtering with one value of σ or if the attempt to fit the focus scores to a polynomial, e.g. a parabola, is not successful, e.g. there is no pronounced maximum within the focus scores. In accordance with one embodiment of the present invention the filtering step may be repeated with another value of σ. This second value of σ may be set automatically by the host processor 9. For instance, if a suitable focus score or maximum thereof is not obtained, the host processor 9 may increase the value of σ and repeat the focusing steps. Alternatively or additionally, if a suitable focus score or maximum of the focus score is not obtained, a field of the specimen adjacent the field used for the focus attempt may be chosen and the focusing steps in accordance with the present invention. This process may be extended by electronically setting different values of σ at the new field position and repeating the focusing steps again. After a predetermined number of failures, the autofocusing procedure may be terminated and the relevant field or specimen may be flagged in some way to indicate that focusing was not possible.

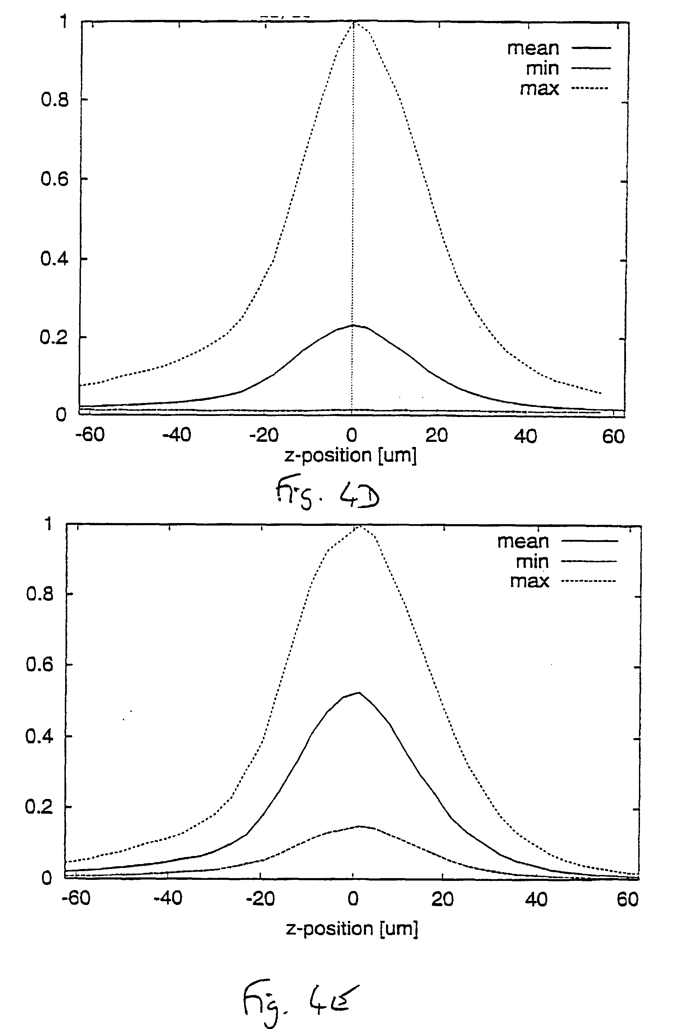

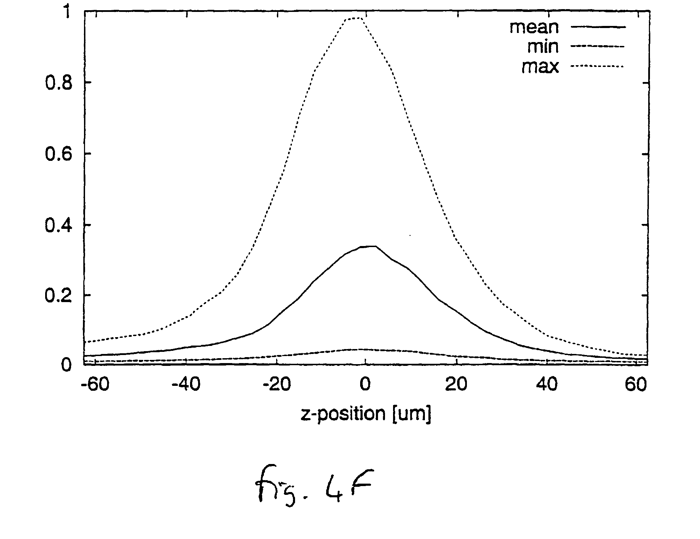

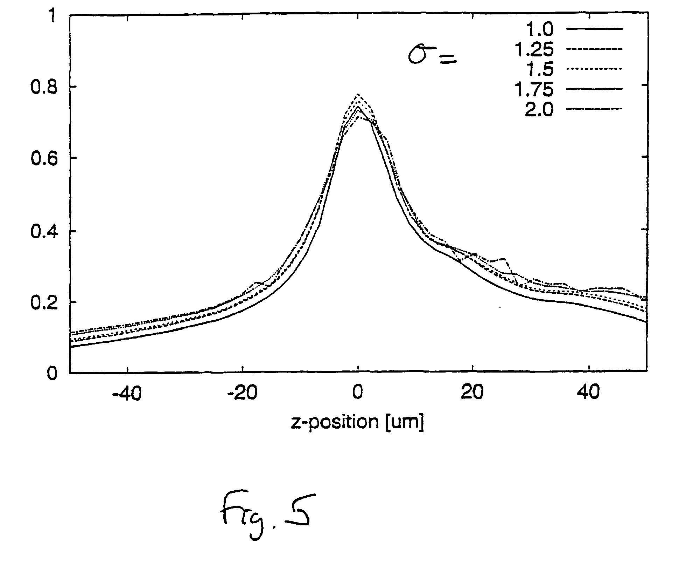

Preferably, the spatial extent σ of the gradient filter in accordance with the present invention is settable in order to optimize noise rejection and object location. In accordance with preferred embodiments of the present invention the operator may input a spatial extent for the focusing process. For example, the operator may input a value of 3 micron to the host processor 9 of Fig. 2. The processor calculates the value of σ based on equation 2 and uses this for the gradient filter. Alternatively, the operator inputs a range into the host processor 9, e.g. 2 to 5 micron. The host processor 9 is programmed to select a value from this range, e.g. the mid-value of 3.5 or the lowest value of 2 microns and to determine the value of σ from equation 2 using this value. If focusing is not successful, i.e. the focus score values are not adequate or a maximum is not found, the host processor 9 may sequentially and automatically select other extent values within the range input by the operator. Alternatively, the processor may select values for σ without operator input. For example, it may start with a default value and select other values if this proves unsuccessful. The exact value of σ is not critical and the digital filter in accordance with the present invention is robust. As shown from Fig. 5 the same focusing position is identified over a range of σ values.

A further embodiment of the present invention includes calculating the focus score for each image at each Z position with a plurality of σ values e.g. $\sigma_1 \sigma_2 ... \sigma_N$. This may be done in parallel. The limit on the number of σ values N may be limited only by the capability of the host processor 9 to calculate the focus scores within a reasonable time. After the focus scores 1-N have been calculated for all the images, each set of scores associated with one σ value is fitted to a suitable curve, e.g. polynomial to obtain the focus position as described above. The result is a set of N focus positions or less if some of the σ values did not result in a focus position. Various algorithms may be applied to obtain the best focus position from the obtained focus positions. For instance, it is anticipated that several of the focus positions will be the same or nearly the same. Hence, there may be a clustering of the focus positions. The cluster may be extracted by digital processing techniques, e.g. eliminating extreme focus positions more than 3 times the standard deviation (least squares) from the average focus position calculated from the set of focus positions. Then an average best focus position is selected as the focus position.

The number of different σ values N does not generally have to be large. As the value of σ determines which size of element is selected by the filtering operation for autofocusing, small changes in σ will not usually change the determined focus point very much (see Fig. 5). Hence, widely spaced σ can be used. Secondly, it not desirable for the filter to select large or small elements of the image which are not related to the desired focused object. Hence, in accordance with an embodiment of the present invention it is preferred if the range of the values of a is settable y the operator. In this way, the operator has some control over what elements of the image will be selected for autofocusing.

To calculate the focus score within the video frame time for current sensors and computer systems, a simplification of the focus function *eq.* 1 is preferably considered with present day computing speeds but the present invention is not limited thereto. For biological preparations, details may be distributed isotropically over the image. In accordance with an embodiment of the present invention the response of the filter in one direction is used for the determination of the focal plane. Further computation time can be saved by estimating the filter response from a fraction of the scan lines in the image. Then, the focus function may be given by

$$F(\sigma) = \frac{L}{NM} \sum_{x,y} \left[ f(x,y) * G_x(x,y,\sigma) \right]^2 \qquad (9)$$

For example, each sixth row ($L = 6$) may be applied. A recursive implementation of the Gaussian derivative is used, for which the computation time is independent of the value of σ. The calculation time could be kept under 40 ms for all computer systems used, even when the system was running other tasks simultaneously. Comparison between the focus curve in two dimensions for the whole image *eq. 1* and the response of *eq. 9* reveals only by marginal differences for all experiments.

For the acquisition of multiple aligned images from large, flat preparations, the variation in focus position is assumed small but noticeable at high magnification. Proper acquisition of adjacent images can be obtained by focusing a few fields. Within the preparation, a procedure in accordance with an embodiment of the present invention starts by focusing the first field. Fields surrounding the focuses field are captured, until the next field to be captured is a given distance away from the initially focused field. Deviation from best focus is now corrected for by focusing over a small interval. The preparation is scanned, keeping track of focus position at fields further away than a given distance from the nearest of all the previously focused fields. The threshold distance for which focusing is skipped depends on the preparation flatness and magnification, and has to be empirically optimized for efficiency. Fields that have been skipped for focusing are positioned at the focus level of the nearest focused field. Small variations in focus position while scanning the preparation are corrected during acquisition.

The autofocus algorithm in accordance with the present invention has been tested in the following applications: a) quantitative neuronal morphology, b) time-lapse experiments of cardiac myocyte dedifferentiation, c) immunohistochemical label detection in fixed tissue d) C. Elegans GFP-VM screening, and e) immunocytochemical label detection in fixed cells. Each of these applications is described below. The software package SCIL-Image version 1.4 (16) (TNO-TPD, Delft, The Netherlands) is used for image processing, extended with the autofocus algorithm and functions for automatic stage control and image capturing in accordance with the present invention.

**Quantitative Neuronal Morphology in Bright-field Mode**

Morphological changes of neurons were automatically quantified as described in "Sodium butyrate induces aberrant tau phosphorylation and programmed cell death in human neuroblastoma cells", Brain Res. 1995, 688, pages 86-94. Briefly, PC12 cells were plated in poly-L-lysine (Sigma, St. Louis, MO) coated 12-well plates. In each well 5 x $10^4$ cells were seeded. After 24 hours the cells were fixed with 1% glutaraldehyde for 10 minutes. Then the cells were washed twice with distilled water. The plates were dried in an incubator.

The plates were examined with objective 5 x NA 0.15 Plan-Neofluar, in bright-field illumination mode on an Axiovert 10 microscope (Carl Zeiss, Oberkochen, Germany). A scanning stage (stage and MAC4000 controller, Märzhäuser, Wetzlar, Germany) was used for automatic position control. At power on, the stage was calibrated and an initial focus level was indicated manually. The camera used was an MX5 (Adaptec, Eindhoven, The Netherlands) 780 x 576 video frame transfer CCD with pixel size 8.2 x 16.07 $\mu m^2$, operating at room temperature with auto gain turned off. Adjacent images were captured by an Indy R4600 132 MHz workstation (Silicon Graphics, Mountain View, CA). As a result, an 8 x 8 mosaic image covering an area of 6.7 x 6.7 $mm^2$ was electronically stored on disk for each well. Prior to the acquisition of the well, autofocusing at the center of the scan area was performed. The smallest details to focus were the neurites, which were about 3 pixels thick, yielding σ = 1.0 (eq. 2). Variability in the z-position of the wells turned out to be within 500 μm, which is taken as the focus interval. The wavelength of the illumination was about 530 nm, resulting in 23.6 μm depth of field (eq. 8). Therefore, stage velocity was reduced to 24.7 μm per video frame (10,000 steps per second) during focusing. Due to the low magnification, backlash correction was not necessary.

**Quantitative Neuronal Morphology - results**

Fig. 4a shows the average focus curve for 180 wells, which were all accurately focused according to an experienced observer. The measured focus curve with the lowest maximum score (peak at 0.004) is at a field containing only some dead cells. The variation in focus score is due to the different number of cells, and their morphology. The local maximum beneath focus is caused by a 180° phase shift in the point-spread function of the optical system.

The time needed for focusing was 1.7 seconds per field, consuming 7.5% of the time to acquire one 12-well plate (4.5 minutes). For these thoroughly stained preparations, the autofocus method was able to focus all fields. Even for fields containing only a few dead cells, the focal plane was accurately determined.

## Cardiac Myocyte Dedifferentiation in Phase Contrast Mode

Cardiac myocytes were isolated from adult rats (ca. 250 gram) heart by collagenase as described in Donck LV, Pauwels, PJ, Vandeplassche G, Borgers M, "Isolated rat cardiac myocytes as an experimental model to study calcium overload: the effect of calcium-entry blockers", Life Sci 1986;38:765-772. The cell suspension containing cardiomyocytes and fibroblasts was seeded on lazminin coated plastic petri dishes, supplied with M199 and incubated for one hour. Thereafter, unattached and/or dead cells were washed away by rinsing once with M199. The petri dishes were filled with M1999 + 20% fetal bovine serum and incubated at 37°C.

The petri dishes were examined with objective 32 x NA 0.4 Achrostigmat Phase 1, in phase contrast mode on an Axiovert 35 microscope (Carl Zeiss, Oberkochen, Germany). During the experiment, ambient temperature was maintained at 37°C. Time-lapse recordings (15 hours) were made in 6 manually selected fields, one in each of the 6 petri dishes. A scanning stage (stage and MAC4000 controller, Märzhäuser, Wetzlar, Germany) visited the selected fields at 120 second intervals. Fields were captured using a CCD camera (TM-765E, Pulnix, Alzenau, Germany). They were added to JPEG compressed digital movies (Indy workstation with Cosmo compressor card, SGI, Mountain View, CA), one for each selected field. Autofocusing was applied once per cycle, successively refocusing all the fields in 6 cycles. The smallest details to focus were the cell borders, which were less than 4 pixels thick, yielding $\sigma = 1.0$ (eq. 2). Variability in the z-position between focus events was expected to be within 100 µm, which was taken as the focus interval. The wavelength of the illumination was about 530 nm, resulting in 3.3 µm depth of field (eq. 8). Therefore, stage velocity was reduced to 2.5 µm per video frame (1,000 steps per second) during focusing.

## Cardiac Myocyte Dedifferentiation - results

Fig. 4b shows the average focus curve (75 events) for one field of the time lapse. All the fields were perfectly focused during the 15 hours of recording, according to experienced observers. The variation in focus score was due to the change in image content, caused by movement of fibroblasts and the dedifferentiation of the myocytes. The axial drift from the initial focal plane during the recording of the six positions varied from 3 µm up to 27 µm. The time needed for focusing was 2.8 seconds per field.

Rat cardiomyocytes are known to dedifferentiate spontaneously in culture, i.e., they spread out, flatten and develop pseudopodia-like processes. Despite these changes in image content during the experiment, none of the time lapse movies was out of focus any time.

## Immunohistochemical Label Detection in Bright-field Mode

Sections of the amygdala of mice injected with a toxic compound were cut at 15 µm thickness through the injection site. They were subsequently immunostained for the presence of the antigen, using a polyclonal antibody (44-136, Quality Control Biochemicals Inc., Hopkinton, MA) and visualized using the chromogen DAB.

Four microscope slides (40 brain slices) were mounted on the stage of an Axioskop microscope (Carl Zeiss, Oberkochen, Germany) and examined with objective 2.5 x NA 0.075 Plan-Neofluar, in bright-field illumination mode. A scanning stage (stage and MC2000 controller, Märzhäuser, Wetzlar, Germany) was used for automatic position control. Adjacent images were captured (Meteor/RGB Framegrabber, Matrox, Donval, Quebec, Canada in an Optiplex GXi PC with Pentium 200 MHz MMX, Dell, Round Rock, TX) by use of an MX5 CCD camera (Adaptec, Eindhoven, The Netherlands). As a result, mosaics of complete brain slices were stored electronically on disk. Prior to acquisition, autofocusing at approximately the center of the brain slice was performed. The smallest detail to focus was the tissue structure, which was about 3 pixels thick, yielding $\sigma = 1.0$ (eq. 2). Variability in the z-position between the glass slides turned out to be within 1000 µm, which was taken as the focus interval. The wavelength of the emitted light was about 530 nm, resulting in 94 µm depth of field (eq. 8). Therefore, stage velocity was reduced to 98.7 µm per video frame (40,000 steps per second) during focusing. Due to the low magnification, backlash correction was not necessary.

## Immunohistochemical Label Detection - results

Fig. 4c shows the average focus curve for the rat brain slices. From the 100 fields examined, 2 fields contained not enough contrast for focusing. These are not included in Fig. 4c. The variation in focus score was caused by the differences in contrast between the slices.

The time needed for focusing was 1.5 seconds per field, consuming 7% of the time to acquire one glass slide (3 minutes): The autofocus method was able to focus 98% of the fields. The contrast in the remaining fields was to low for accurate focusing.

**C Elegans GFP-VM Screening in Fluorescence Mode**

Individual C. Elegans worms transgenic for GFP expressing vulval muscles (GFP-VM) were selected from stock, and one young adult hermafrodite ($P_0$) was placed in each of the 60 center wells of a 96-well plate (Costar, Acton, MA) filled with natural growth medium, and incubated for five days at 25°C to allow $F_1$ progeny to reach adult stage.

Before image acquisition, fluorescent beads (F-8839, Molecular Probes, Eugene, OR) were added to the wells as background markers for the focus algorithm. The well plate was examined with an objectives 40 x NA 0.6 Archoplan, in fluorescence mode on an Axiovert 135 microscope (Carl Zeiss, Oberkochen, Germany). A FITC filter (B, Carl Zeiss, Oberkochen, Germany) in combination with a 100W Xenbophot lamp was used to excite the green fluorescent protein (GFP). Images were captured (02 R5000 180 MHz workstation, Silicon Graphics, Mountain View, CA) using an intensified CCD camera (IC-200, PTI, Monmouth Junction, NJ). The scanning stage (stage and MC2000 controller, Märzhäuser, Wetzlar, Germany) was calibrated to capture adjacent images. Each of the selected wells was scanned and the adjacent images, completely covering the well, were stored electronically on disk. Variability in the z-position between the center of the wells turned out to be within 250 μm, which was taken as the focus interval. After autofocusing on the well center, deviation from best focus while scanning the well was corrected. It turned out that autofocusing over one-fifth the focus interval (50 μm) for fields further than 3 fields away from a focused field was sufficient. The fluorescent spheres were 30 pixels in diameter, yielding $\sigma = 8.5$ (eq. 2). The wavelength of the emitted light was about 530 nm, resulting in 1.47 μm depth of field (eq. 8). The diameter of the fluorescent spheres was 15 μm, which is much larger than $z_d$. Since the spheres were homogeneously stained, the smallest detail to consider in the z-direction was a cylindrically shaped slice through the spheres, where the cylinder height was determined by the horizontal resolution. Therefore, the stage velocity was reduced to approximately one third of the sphere diameter during focusing, yielding 4.94 μm per video frame (2,000 steps per second). Backlash correction offset was determined to be 15 μm.

**C. Elegans GFP-VM Screening -results**

Fig. 4d shows the average focus curve for 1786 fields of the C. Elegans screening. Fourteen of the 1800 fields did not contain fluorescent spheres, consequently accurate focusing was not possible. These are not included in Fig. 4d. The remaining fields were accurately focused according to an experience observer. The variation in focus score was caused by the different number of spheres and the presence or absence of worms in the focused fields. The time needed for focusing was 2.8 seconds for the first field in a well, and 1.1 seconds per field for keeping track of the focal plane within the well. Autofocusing consumed 12% of the time to acquire one 96-well plate (4.5 hours for 28,000 images), which is reasonable given the time needed for the preparation.

The images were highly degraded by the presence of random noise (SNR $\approx$ 10 dB) due to fluorescent bacteria and structural noise caused by earth loops in combination with the extremely sensitive CCD camera. The focus algorithm was able to find the correct focus position for all but 14 out of 1800 fields examined. Failure was caused by a shortage of relevant image information content.

**Immunocytochemical Label Detection in Fluorescence Mode**

Human fibroblasts were seeded in a 96-well plate (Costar, Acton, MA) at 7000 cells per well, in 2% FBS/Optimem. The cells were fixed and permeabilized by adding 2% paraformaldehyde and 0.5% Triton-X-100 (Sigma, St. Louis, MO). The reaction was stopped after 30 minutes by washing with PBS, addition of 5% NGS during 60 minutes, and washing with 0.2% BSA/PBS for 5 minutes. A dilution of 1/100 primary antibody rabbit anti human NF-$_\kappa$B (p65) (Santa Cruz Biotechnology, Santa Cruz, CA) in 0.2% BSA/PBS was added to each well for 2 hours at 37°C. After washing 3 times with PBS for 10 minutes, Cy3 labeled sheep anti rabbit (Jackson, Uvert-Grove, PA) dilution (1/2 glycerol, 1/250 0.2% BSA/PBS) was added to each well for 60 minutes at 37°C. After washing with 0.2% BSA/PBS for 15 minutes and repeated washing with PBS, and nuclear counter staining with Hoechst 33342 (Molecular Probes, Eugene, OR), the cells were ready for quantitative evaluation.

Well plates were examined with an objective 40 x NA 0.6 Achroplan, in fluorescence mode on an Axiovert 135 microscope (Carl Zeiss, Oberkochen, Germany). A DAPI/FITC/TRITC filter (XF66, Omega Optical, Brattleboro, VT) in combination with a 100W Xenophot lamp was used to excite the cells. A scanning stage (stage and MC2000 controller, Märzhäuser, Wetzlar, Germany) was used for automatic position control. Adjacent images were captured (02 workstation R5000 180MHZ, Silicon Graphics, Mountain View, CA) using an intensified CCD camera (IC-200, PTI, Monmouth Junction, NJ). As a result, two 5 x 5 mosaic images, one for the nuclei and one for the immuno signal, was stored on disk for each well. The covered area per well was 1.2 x 1.2 mm$^2$. Prior to the acquisition of each mosaic image, autofocusing at approximately the center of the scan area was performed. The smallest details to focus were the nuclei, which were minimally 30 pixels in diameter, yielding $\sigma = 8.5$ (eq. 2). Variability in the z-position of the wells turned out to be within 250 µm, which was taken as the focus interval. The wave length of the emitted light was about 450 nm (nuclei) and 600 nm (immuno signal), resulting in 1.25 µm and 1.67 µm depth of field (eq. 8), respectively. Cell thickness was about 5-15 µm, much larger than $z_d$. Therefore, the stage velocity was reduced to 4.94 µm per video frame (2,000 steps per second) during focusing. Backlash correction offset was determined to be 15 µm.

**Immunocytochemical Label detection - results**

Fig. 4e shows the average focus curve for the nuclei in the immunocytochemical label detection. All the 150 fields were accurately focused according to an experienced observer. The variation in focus score was due to the different number of cells present in each field. The average focus curve as measured for the immuno signal is shown in Fig. 4f. From the 150 fields examined, 2 fields were completely saturated due to preparation artifacts, causing the focus algorithm to fail. These fields are not included in Fig. 4f. the remaining fields were accurately focused. The time needed for focusing was 2.8 seconds per field, consuming 14% of the time to acquire one 96-well plate (20 minutes).

The signal to noise ratio was estimated to be about 10 dB for the nuclei, and 4dB for the immuno signal. Despite the noise, the autofocus method was able to focus all but two out of 300 fields. Failure was caused by a shortage of relevant image information content.

**Comparison of Performance with Small Derivative Filters**

In order to evaluate the effect of the scale $\sigma$ in the estimate for the focus score, experiments with a fixed (non-selectable) $\sigma = 0.5$ were performed.

For the quantitative neuronal morphology, accurate focusing with $\sigma = 0.5$ was not possible for 1 out of 24 fields. In this case, the algorithm focused on the reversed contrast image. Application of the small scale in focusing of the cardiac myocyte dedifferentiation failed whenever fungal contamination at the medium surface occurred, which was taken as the local plane. Taking $\sigma = 1.0$ solved this problem, that is by focusing persistently on the myocytes. Focusing with $\sigma = 0.5$ on the immunohistochemical label detection resulted in focusing on dust particles at the glass surface for 5 out of 24 fields.

For the fluorescence applications, accurate focusing was not possible with $\sigma = 0.5$, due to the small signal to noise ratio. Experiments taken with $\sigma = 0.75$ resulted in inaccurate focusing for 18 out of 30 fields for the C. Elegans GFP-VM screening. Further, the algorithm was not able to focus accurately on 13 out of 30 fields for the nuclei in the immunocytochemical label detection, and failed for 17 out of 30 fields on the immuno signal.

The effect of the scale $\sigma$ results in robustness against noise and artifacts. A larger scale results in robustness against phase reversion (quantitative neuronal morphology), fungal contamination at the medium surface (cardia myocyte dedifferentiation), dust on the glass surface (immunohistochemical label detection) and noise (the fluorescence applications). From these results it can be inferred that the performance of small differential filters, as used conventionally, is poor given the number of inaccurately focused images for $\sigma = 0.5$ or $\sigma = 0.75$. Further, it can be inferred that the scale $\sigma$ should preferably be at least 1. This is equivalent to 3 pixels. Hence, a preferred range for the scale $\sigma$ in accordance with the present invention is from at least 3 pixels up to the size of the image itself

For the different applications, the chosen focus interval was effectively used for about 30%. The focus interval is preferably not taken too narrowly to ensure that the focal plane is inside the interval, regardless of the manual placement of the preparations.

The time needed for the autofocus algorithm varied from 1.5 up to 2.8 seconds for current sensors and computer systems, which is in the same time range as trained observers. Focus time is determined by the depth of field and the video frame time, both of which can be considered as given quantities, and by the size of the focus interval. Further reduction of focus time can be achieved by a smaller focus interval, on the condition that the variability in preparation position is limited. When positional variability is low or well known, the focus interval $\Delta z$ can be reduced to exactly fit the variability. For the applications given, the focus time can be reduced up to a factor 3 in this way.

Failure of the autofocus algorithm due to a shortage of image content can be well predicted. If the focal plane is inside the focus interval, there should be global maximum in the estimate of the focus curve. Comparing the maximum focus score $s_0$ with the highest of the focus scores at the ends of the focus interval, $s_e = \max(s(0), s(t_d))$ which are certainly not in focus, determines the signal content with respect to noise. When the maximum score does not exceed significantly the focus scores at the ends of the interval, or $(s_0 - s_e)/s_e < \alpha$, the found focus position should be rejected. In this case, focusing can better be based on a neighboring field. For the reported results, a threshold of $\alpha = 10\%$ safely predicts all failures. Accordingly, in accordance with the present invention a specimen may be focused correctly, or if the specimen cannot be focused correctly this can be determined by the system from the focus scores and this sample and/or its image can be labeled/flagged that focusing was inadequate automatically. This provides a significant advantage as the operator may then identify these specimens and carry out other forms of focusing as required, e.g. manually without the time-consuming necessity to check every image to see if any are out of focus.

**Claims**

1. A method of autofocus for an optical instrument for viewing an object and having an auto-focusing mechanism, comprising the steps of:

   step 1: acquiring a first digital image of the object through the optical instrument, the first digital image comprising a plurality of pixels having pixel values;
   step 2: applying a digital gradient filter to at least some of the pixel values of the first digital image to obtain a focus score for the first digital image; wherein the digital filter is defined by a mathematical smoothing function having a negative and positive lobe around the origin thereof, the mathematical smoothing function having only one zero crossing and being limited in a settable spatial extent in that it extends over a distance smaller than or equal to the image size and extends at least over three pixels either side of a pixel whose value is being filtered.

2. The method of claim 1, wherein the spatial extent of the smoothing function is manually and/or electronically settable.

3. The method according to any previous claim, further comprising:

   step 3: moving the object relative to the optical instrument along the optical axis thereof and acquiring a second digital image and a second focus score therefor in accordance with the method of steps 1 and 2;
   step 4: continue moving the object relative to the optical instrument along the optical axis thereof in the same direction in accordance with steps 1 to 3 to acquire at least three digital images and first to third focus scores associated therewith; and
   step 5: determining from the first to third focus scores a focus position for the object and moving the object and/or the optical instrument to this position.

4. The method according to claim 1 or 2, further comprising:

   step 3: determining a first plurality of focus scores for the first digital image using the digital gradient filter with a first plurality of spatial extents by applying for each spatial extent the method steps 1 and 2 ;
   step 4: moving the object relative to the optical instrument along the optical axis thereof and acquiring a second digital image and a second plurality of focus scores therefor in accordance with the method of step 3;
   step 5: continue moving the object relative to the optical instrument along the optical axis thereof in the same direction in accordance with steps 1 to 3 to acquire at least three digital images and first to third pluralities of focus scores associated therewith; and
   step 6: determining from the first to third plurality of focus scores a focus position for the object and moving the object andlor the optical instrument to this position.

5. The method according to any previous claim, wherein the optical instrument is a microscope.

6. The method according to claim 3 , 4 or 5, wherein the determining step includes fitting the focus scores to a polynomial function and moving the object and/or the optical instrument to a position related to a maximum of the polynomial function.

7. The method according to any of the previous claims, wherein the digital filtering function is a one or two-dimensional function.

8. The method according to any previous claim, wherein the digital filtering function is a Gaussian function.

9. The method according to any of the previous claims, further comprising the step of selecting the spatial extent of the digital filtering function.

10. An optical instrument for viewing an object and having an auto-focusing mechanism, the optical instrument being adapted to acquire a first digital image of the object through the optical instrument, the first digital image comprising a plurality of pixels having pixel values; and the auto-focusing mechanism having a digital gradient filter to filter at least some of the pixel values of the first digital image to obtain a focus score for the first digital image wherein the digital filter is defined by a mathematical smoothing function having a negative and positive lobe around the origin thereof, the mathematical smoothing function having only one zero crossing and being limited in a settable spatial extent in that it extends over a distance smaller than or equal to the image size and extends at least over three pixels either side of a pixel whose value is being filtered.

11. The optical instrument of claim 10, wherein the spatial extent of the smoothing function is manually and/or electronically settable.

12. The optical instrument according to any of claims 10 to 12, further comprising: a drive device for moving the object relative to the optical instrument along the optical axis thereof.

13. The optical instrument according to any of claims 10 to 13, the instrument being further adapted for determining from a plurality of focus scores for a plurality of images a focus position for the object.

14. The optical instrument according to claim 13 further adapted for fitting the plurality of focus scores to a polynomial function and determining the focus position as a position related to a maximum of the polynomial function.

15. The optical instrument according to 14, the instrument being adapted to determine for each image a plurality of focus scores using a plurality of spatial extents for the digital filter.

16. The optical instrument according to any of the claims 10 to 15, wherein the digital filtering function is a one or two-dimensional function.

17. The optical instrument according to any of claims 10 to 16, wherein the digital filtering function is a Gaussian function.

18. The optical instrument according to any of claims 10 to 17, wherein the optical instrument is a microscope.

19. The optical instrument according to any of the claims 10 to 18, wherein the extent of the digital filtering function is manually and/or electronically settable.

20. An auto-focusing mechanism for an optical instrument, the optical instrument being provided for viewing an object and for acquiring a digital image of the object, the digital image comprising a plurality of pixels having pixel values; the mechanism comprising: a digital gradient filter to filter at least some of the pixel values of the digital image to obtain a focus score for the digital image wherein the digital filter is defined by a mathematical smoothing function having a negative and positive lobe around the origin thereof, the mathematical smoothing function having only one zero crossing and being limited in a settable spatial extent in that it extends over a distance smaller than or equal to the image size and extends at least over three pixels either side of a pixel whose value is being filtered.

21. The autofocus mechanism according to claim 22, wherein the spatial extent of the smoothing function is electronically and/or manually settable.

22. The mechanism according to any of claims 20 to 21, wherein the digital filtering function is a one or two-dimensional function.

23. The mechanism according to any of claims 20 to 22, wherein the digital filtering function is a Gaussian function.

24. The mechanism according to any of claims 20 to 23, comprising the mechanism being adapted for determining from a plurality of focus scores for a plurality of images a focus position for the object.

25. The mechanism according to claim 24, further adapted for fitting the plurality of focus scores to a polynomial function and determining the focus position as a position related to a maximum of the polynomial function.

**Patentansprüche**

1. Autofokusverfahren für ein optisches Instrument zum Betrachten eines Gegenstands und mit einem Autofokussiermechanismus, umfassend folgende Schritte:

   Schritt 1: Gewinnen eines ersten digitalen Bildes von dem Gegenstand durch das optische Instrument, wobei das erste digitale Bild eine Vielzahl von Pixeln mit Pixelwerten umfaßt;

   Schritt 2: Anwenden eines digitalen Gradientfilters auf wenigstens einige der Pixelwerte des ersten digitalen Bildes, um eine Fokusauswertung für das erste digitale Bild zu erhalten; wobei der digitale Filter durch eine mathematische Glättungsfunktion definiert ist, die einen negativen und positiven Zacken um ihren Ursprung aufweist, wobei die mathematische Glättungsfunktion nur einen Nulldurchgang aufweist und in einer einstellbaren räumlichen Ausdehnung dadurch begrenzt ist, daß sie sich über eine Strecke erstreckt, die kleiner oder gleich der Bildgröße ist und sich wenigstens über drei Pixel zu beiden Seiten eines Pixels erstreckt, dessen Wert gefiltert wird.

2. Verfahren nach Anspruch 1, wobei die räumliche Ausdehnung der Glättungsfunktion manuell und/oder elektronisch eingestellt werden kann.

3. Verfahren nach einem der vorhergehenden Ansprüche, des weiteren umfassend:

   Schritt 3: Bewegen des Gegenstands relativ zu dem optischen Instrument entlang von dessen optischer Achse und Gewinnen eines zweiten digitalen Bildes und einer zweiten Fokusauswertung dafür in Übereinstimmung mit den Verfahren von Schritt 1 und 2;

   Schritt 4: Fortsetzung des Bewegens des Gegenstands relativ zu dem optischen Instrument entlang von dessen optischer Achse in der gleichen Richtung in Übereinstimmung mit den Schritten 1 bis 3, um wenigstens drei digitale Bilder und erste bis dritte damit verbundene Fokusauswertungen zu gewinnen; und

   Schritt 5: Bestimmen einer Fokusposition für den Gegenstand aus den ersten bis dritten Fokusauswertungen und Bewegen des Gegenstands und/oder des optischen Instruments in diese Position.

4. Verfahren nach Anspruch 1 oder 2, des weiteren umfassend:

   Schritt 3: Bestimmen einer ersten Vielzahl von Fokusauswertungen für das erste digitale Bild, wobei ein digitaler Gradientfilter mit einer ersten Vielzahl von räumlichen Ausdehnungen verwendet wird, indem auf jede räumliche Ausdehnung die Verfahrensschritte 1 und 2 angewendet werden;

   Schritt 4: Bewegen des Gegenstands relativ zu dem optischen Instrument entlang von dessen optischer Achse und Gewinnen eines zweiten digitalen Bildes und einer zweiten Vielzahl von Fokusauswertungen dafür in Übereinstimmung mit dem Verfahren von Schritt 3.

   Schritt 5: Fortsetzung des Bewegens des Gegenstands relativ zu dem optischen Instrument entlang von dessen optischer Achse in der gleichen Richtung in Übereinstimmung mit den Schritten 1 bis 3, um wenigstens drei digitale Bilder und eine erste bis dritte Vielzahl von damit verbundenen Fokusauswertungen zu gewinnen; und

   Schritt 6: Bestimmen einer Fokusposition für den Gegenstand aus den ersten bis dritten Vielzahl von Fokusauswertungen und Bewegen des Gegenstands und/oder des optischen Instruments in diese Position.

5. Verfahren nach einem der vorhergehenden Ansprüche, wobei das optische Instrument ein Mikroskop ist.

6. Verfahren nach Anspruch 3, 4 oder 5, wobei der bestimmende Schritt das Aufnehmen der Fokusauswertungen in eine Polynomfunktion umfaßt und das Bewegen des Gegenstands und/oder des optischen Instruments in eine Position, die zu einem Maximum der Polynomfunktion in Beziehung steht.

7. Verfahren nach einem der vorhergehenden Ansprüche, wobei die digitale Filterfunktion eine ein- oder zweidimensionale Funktion ist.

8. Verfahren nach einem der vorhergehenden Ansprüche, wobei die digitale Filterfunktion eine Gaußsche Funktion ist.

9. Verfahren nach einem der vorhergehenden Ansprüche, des weiteren umfassend den Schritt zum Auswählen der räumlichen Ausdehnung der digitalen Filterfunktion.

10. Optisches Instrument zum Betrachten eines Gegenstands und mit einem Autofokussiermechanismus, wobei das optische Instrument eingerichtet ist, um ein erstes digitales Bild des Gegenstands durch das optische Instrument zu gewinnen, wobei das erste digitale Bild eine Vielzahl von Pixeln umfaßt, die Pixelwerte besitzen; und der Autofokussiermechanismus einen digitalen Gradientfilter aufweist, um wenigstens einige der Pixelwerte des ersten digitalen Bildes zu filtern, um eine Fokusauswertung für das erste digitale Bild zu erhalten, wobei der digitale Filter durch eine mathematische Glättungsfunktion definiert ist, die einen negativen und positiven Zacken um ihren Ursprung aufweist, wobei die mathematische Glättungsfunktion nur einen Nulldurchgang aufweist und in einer einstellbaren räumlichen Ausdehnung dadurch begrenzt ist, daß sie sich über eine Strecke erstreckt, die kleiner oder gleich der Bildgröße ist und sich wenigstens über drei Pixel zu beiden Seiten eines Pixels erstreckt, dessen Wert gefiltert wird.

11. Optisches Instrument nach Anspruch 10, wobei die räumliche Ausdehnung der Glättungsfunktion manuell und/ oder elektronisch einstellbar ist.

12. Optisches Instrument nach einem der Ansprüche 10 bis 12, des weiteren umfassend: eine Antriebsvorrichtung zum Bewegen des Gegenstands relativ zu dem optischen Instrument entlang von dessen optischer Achse.

13. Optisches Instrument nach einem der Ansprüche 10 bis 13, wobei das Instrument des weiteren eingerichtet ist, um aus einer Vielzahl von Fokusauswertungen für eine Vielzahl von Bildern eine Fokusposition für den Gegenstand zu bestimmen.

14. Optisches Instrument nach Anspruch 13, des weiteren eingerichtet, um die Vielzahl von Fokusauswertungen in eine Polynomfunktion aufzunehmen und die Fokusposition als eine Position zu bestimmen, die zu einem Maximum der Polynomfunktion in Beziehung steht.

15. Optisches Instrument nach Anspruch 14, wobei das Instrument eingerichtet ist, um für jedes Bild eine Vielzahl von Fokusauswertungen zu bestimmen, wobei eine Vielzahl von räumlichen Ausdehnungen für den digitalen Filter verwendet wird.

16. Optisches Instrument nach einem der Ansprüche 10 bis 15, wobei die digitale Filterfunktion eine ein- oder zweidimensionale Funktion ist.

17. Optisches Instrument nach einem der Ansprüche 10 bis 16, wobei die digitale Filterfunktion eine Gaußsche Funktion ist.

18. Optisches Instrument nach einem der Ansprüche 10 bis 17, wobei das optische Instrument ein Mikroskop ist.

19. Optisches Instrument nach einem der Ansprüche 10 bis 18, wobei die Ausdehnung der digitalen Filterfunktion manuell und/oder elektronisch einstellbar ist.

20. Autofokussiermechanismus für ein optisches Instrument, wobei das optische Instrument zum Betrachten eines Gegenstands vorgesehen ist und zum Gewinnen eines digitalen Bildes des Gegenstands, wobei das digitale Bild eine Vielzahl von Pixeln umfaßt, die Pixelwerte besitzen; wobei der Mechanismus umfaßt: einen digitalen Gradientfilter, um wenigstens einige der Pixelwerte des digitalen Bildes zu filtern, um eine Pokusauswertung für das digitale Bild zu erhalten, wobei der digitale Filter durch eine mathematische Glättungsfunktion definiert ist, die einen negativen und positiven Zacken um ihren Ursprung aufweist, wobei die mathematische Glättungsfunktion nur einen Nulldurchgang aufweist und in einer einstellbaren räumlichen Ausdehnung dadurch begrenzt ist, daß sie sich über eine Strecke erstreckt, die kleiner oder gleich der Bildgröße ist und sich wenigstens über drei Pixel zu beiden Seiten eines Pixels erstreckt, dessen Wert gefiltert wird.

21. Autofokussiermechanismus nach Anspruch 22, wobei die räumliche Ausdehnung der Glättungsfunktion manuell und/oder elektronisch einstellbar ist.

**22.** Mechanismus nach einem der Ansprüche 20 bis 21, wobei die digitale Filterfunktion eine ein- oder zweidimensionale Funktion ist.

**23.** Mechanismus nach einem der Ansprüche 20 bis 22, wobei die digitale Filterfunktion eine Gaußsche Funktion ist.

**24.** Mechanismus nach einem der Ansprüche 20 bis 23, umfassend den Mechanismus, der eingerichtet ist, um aus einer Vielzahl von Fokusauswertungen für eine Vielzahl von Bildern eine Fokusposition für den Gegenstand zu bestimmen.

**25.** Mechanismus nach Anspruch 24, der des weiteren eingerichtet ist, um die Vielzahl von Fokusauswertungen in eine Polynomfunktion aufzunehmen und die Fokusposition als eine Position zu bestimmen, die zu einem Maximum der Polynomfunktion in Beziehung steht.

**Revendications**

**1.** Procédé de mise au point automatique pour un instrument optique permettant de visualiser un objet et doté d'un mécanisme de mise au point automatique, comprenant les étapes suivantes :

étape 1 : acquisition d'une première image numérique de l'objet par l'intermédiaire de l'instrument optique, la première image numérique comprenant une pluralité de pixels ayant des valeurs de pixels ;
étape 2 : application d'un filtre de gradient numérique à au moins certaines des valeurs de pixels de la première image numérique pour obtenir un score de mise au point pour la première image numérique, le filtre numérique étant défini par une fonction mathématique de lissage comportant un lobe négatif et positif autour de son origine, la fonction mathématique de lissage ne comportant qu'un seul passage par zéro et étant limitée à une étendue spatiale réglable en ce qu'elle s'étend sur une distance inférieure ou égale à la dimension de l'image et s'étend d'au moins trois pixels de chaque côté d'un pixel dont la valeur fait l'objet du filtrage.

**2.** Procédé selon la revendication 1, dans lequel l'étendue spatiale de la fonction de lissage est réglable manuellement et/ou par voie électronique.

**3.** Procédé selon l'une quelconque des revendications précédentes, comprenant en outre :

étape 3 : déplacement de l'objet par rapport à l'instrument optique le long de son axe optique et acquisition d'une deuxième image numérique et d'un deuxième score de mise au point pour celle-ci conformément au procédé des étapes 1 et 2 ;
étape 4 : poursuite du déplacement de l'objet par rapport à l'instrument optique le long de son axe optique dans la même direction conformément aux étapes 1 à 3, en vue d'acquérir au moins trois images numériques et des premier à troisième scores de mise au point associés à celles-ci ; et
étape 5 : détermination, à partir des premier à troisième scores de mise au point, d'une position de mise au point pour l'objet et déplacement de l'objet et/ou de l'instrument optique jusqu'à cette position.

**4.** Procédé selon la revendication 1 ou 2, comprenant en outre :

étape 3 : détermination d'une première pluralité de scores de mise au point pour la première image numérique à l'aide du filtre de gradient numérique avec une première pluralité d'étendues spatiales en appliquant pour chaque étendue spatiale le procédé des étapes 1 et 2 ;
étape 4 : déplacement de l'objet par rapport à l'instrument optique le long de son axe optique et acquisition d'une deuxième image numérique et d'une deuxième pluralité de scores de mise au point pour celle-ci conformément au procédé de l'étape 3 ;
étape 5 : poursuite du déplacement de l'objet par rapport à l'instrument optique le long de son axe optique dans la même direction conformément aux étapes 1 à 3 en vue d'acquérir au moins trois images numériques et des première à troisième pluralités de scores de mise au point associées à celles-ci ; et
étape 6 : détermination, à partir des première à troisième pluralités de scores de mise au point, d'une position de mise au point pour l'objet et déplacement de l'objet et/ou de l'instrument optique jusqu'à cette position.

**5.** Procédé selon l'une quelconque des revendications précédentes, dans lequel l'instrument optique est un microscope.

**6.** Procédé selon la revendication 3, 4 ou 5, dans lequel l'étape de détermination comporte l'ajustement des scores de mise au point sur une fonction polynomiale et le déplacement de l'objet et/ou de l'instrument optique jusqu'à une position liée à un maximum de la fonction polynomiale.

**7.** Procédé selon l'une quelconque des revendications précédentes, dans lequel la fonction de filtrage numérique est une fonction à une ou deux dimensions.

**8.** Procédé selon l'une quelconque des revendications précédentes, dans lequel la fonction de filtrage numérique est une fonction gaussienne.

**9.** Procédé selon l'une quelconque des revendications précédentes, comprenant en outre l'étape de sélection de l'étendue spatiale de la fonction de filtrage numérique.

**10.** Instrument optique permettant de visualiser un objet et doté d'un mécanisme de mise au point automatique, l'instrument optique étant conçu pour acquérir une première image numérique de l'objet par l'intermédiaire de l'instrument optique, la première image numérique comprenant une pluralité de pixels ayant des valeurs de pixels ; et le mécanisme de mise au point automatique comportant un filtre de gradient numérique en vue de filtrer au moins certaines des valeurs de pixels de la première image numérique pour obtenir un score de mise au point pour la première image numérique, le filtre numérique étant défini par une fonction mathématique de lissage comportant un lobe négatif et positif autour de son origine, la fonction mathématique de lissage ne comportant qu'un seul passage par zéro et étant limitée à une étendue spatiale réglable en ce qu'elle s'étend sur une distance inférieure ou égale à la dimension de l'image et s'étend d'au moins trois pixels de chaque côté d'un pixel dont la valeur fait l'objet du filtrage.

**11.** Instrument optique selon la revendication 10, dans lequel l'étendue spatiale de la fonction de lissage est réglable manuellement et/ou par voie électronique.

**12.** Instrument optique selon l'une quelconque des revendications 10 à 12, comprenant en outre : un dispositif d'entraînement pour déplacer l'objet par rapport à l'instrument optique le long de son axe optique.

**13.** Instrument optique selon l'une quelconque des revendications 10 à 13, l'instrument étant en outre conçu pour déterminer, à partir d'une pluralité de scores de mise au point pour une pluralité d'images, une position de mise au point pour l'objet.

**14.** Instrument optique selon la revendication 13, conçu en outre pour ajuster la pluralité de scores de mise au point sur une fonction polynomiale et déterminer la position de mise au point comme une position liée à un maximum de la fonction polynomiale.

**15.** Instrument optique selon la revendication 14, l'instrument étant conçu pour déterminer, pour chaque image, une pluralité de scores de mise au point à l'aide d'une pluralité d'étendues spatiales pour le filtre numérique.

**16.** Instrument optique selon l'une quelconque des revendications 10 à 15, dans lequel la fonction de filtrage numérique est une fonction à une ou deux dimensions.

**17.** Instrument optique selon l'une quelconque des revendications 10 à 16, dans lequel la fonction de filtrage numérique est une fonction gaussienne.

**18.** Instrument optique selon l'une quelconque des revendications 10 à 17, dans lequel l'instrument optique est un microscope.

**19.** Instrument optique selon l'une quelconque des revendications 10 à 18, dans lequel l'étendue de la fonction de filtrage numérique est réglable manuellement et/ou par voie électronique.

**20.** Mécanisme de mise au point automatique pour un instrument optique, l'instrument optique étant prévu pour visualiser un objet et pour acquérir une image numérique de l'objet, l'image numérique comprenant une pluralité de pixels ayant des valeurs de pixels ; le mécanisme comprenant : un filtre de gradient numérique en vue de filtrer au moins certaines des valeurs de pixels de l'image numérique pour obtenir un score de mise au point pour l'image numérique, le filtre numérique étant défini par une fonction mathématique de lissage comportant un lobe négatif et positif autour de son origine, la fonction mathématique de lissage ne comportant qu'un seul passage par zéro et étant limitée à une étendue spatiale réglable en ce qu'elle s'étend sur une distance inférieure ou égale à la dimension de l'image et s'étend d'au moins trois pixels de chaque côté d'un pixel dont la valeur fait l'objet du filtrage.

21. Mécanisme de mise au point automatique selon la revendication 22, dans lequel l'étendue spatiale de la fonction de lissage est réglable manuellement et/ou par voie électronique.

22. Mécanisme selon l'une quelconque des revendications 20 à 21, dans lequel la fonction de filtrage numérique est une fonction à une ou deux dimensions.

23. Mécanisme selon l'une quelconque des revendications 20 à 22, dans lequel la fonction de filtrage numérique est une fonction gaussienne.

24. Mécanisme selon l'une quelconque des revendications 20 à 23, le mécanisme étant conçu pour déterminer, à partir d'une pluralité de scores de mise au point pour une pluralité d'images, une position de mise au point pour l'objet.

25. Mécanisme selon la revendication 24, conçu en outre pour ajuster la pluralité de scores de mise au point sur une fonction polynomiale et déterminer la position de mise au point comme une position liée à un maximum de la fonction polynomiale.

Fig 1A

Fig. 1B

Fig. 1C

Fig. 2

Gauss spatial derivative - 1 dimension

Fig. 3A

EP 1 190 271 B1

Bessel J1 - 1 dimension

Fig. 3B

Bessel J1 damped by (x^2+1) - 1 dimension

fig. 3c

EP 1 190 271 B1

Gauss spatial derivative - 2 dimensions

Fig. 3D

# Gauss spatial derivative - 2D rotated + shifted

Fig. 3E

EP 1 190 271 B1

fig. 4 A

fig 4 B

Fig 4c

Fig. 4D

Fig. 4E

fig. 4F

Fig. 5